# Europäisches Patentamt

# European Patent Office

# Office européen des brevets

(19)

(11) Veröffentlichungsnummer: **0 159 370**
**B1**

(12) **EUROPÄISCHE PATENTSCHRIFT**

(45) Veröffentlichungstag der Patentschrift:
**19.11.87**

(51) Int. Cl.⁴: **B 60 R 22/48**

(21) Anmeldenummer: **84104522.2**

(22) Anmeldetag: **21.04.84**

(54) **Sicherheitsgurt-Meldevorrichtung für Kraftfahrzeuge.**

(43) Veröffentlichungstag der Anmeldung:
**30.10.85 Patentblatt 85/44**

(45) Bekanntmachung des Hinweises auf die Patenterteilung:
**19.11.87 Patentblatt 87/47**

(84) Benannte Vertragsstaaten:
**AT CH FR GB IT LI NL**

(56) Entgegenhaltungen:
**DE - A - 2 341 834**
**FR - A - 2 450 485**
**GB - A - 2 029 060**
**US - A - 3 947 812**
**US - A - 3 962 677**
**US - A - 4 162 479**

**Die Akte enthält technische Angaben, die nach dem Eingang der Anmeldung eingereicht wurden und die nicht in dieser Patentschrift enthalten sind.**

(73) Patentinhaber: **Firma Gesine Mayer, Oberstrasse 46, D-6081 Stockstadt / Rhein (DE)**

(72) Erfinder: **Mayer, Günter, Freiligrath-Strasse 48, D-6102 Pfungstadt (DE)**

(74) Vertreter: **Katscher, Helmut, Dipl.-Ing., Bismarckstrasse 29, D-6100 Darmstadt (DE)**

## Beschreibung

Die Erfindung bezieht sich auf eine Sicherheitsgurt-Meldevorrichtung für ein Kraftfahrzeug, das eine Batterie, eine Lichtmaschine und einen Anlasser aufweist, der zum Anlassen eines Verbrennungsmotors von der Batterie mit Energie versorgt wird, wobei eine Anordnung zur Erzeugung einer optischen und/oder akustischen Meldung vorgesehen ist.

Eine Sicherheitsgurt-Meldevorrichtung der vorstehend beschriebenen Art ist aus der US-A-3 962 677 bekannt. Diese Sicherheitsgurt-Meldevorrichtung enthält eine an die Ausgänge des Zündschalters des Kraftfahrzeugs angeschlossene Ansteuerschaltung für eine Lampe und einen Summer. In der Ansteuerschaltung befindet sich ein Zeitverzögerungsglied. Wenn bei der bekannten Sicherheitsgurt-Meldevorrichtung der Zündschlüssel die Kontakte des Zündschalters schliesst, ohne dass der Sicherheitsgurt angelegt ist, werden einerseits die optische und akustische Meldung hervorgerufen und andererseits das Zeitverzögerungsglied angestossen. Das Zeitverzögerungsglied schaltet nach Ablauf einer vorgegebenen Verzögerungszeit die optische und akustische Meldung ab.

Der Erfindung liegt die Aufgabe zugrunde, eine Sicherheitsgurt-Meldevorrichtung der eingangs beschriebenen Gattung derart weiterzuentwickeln, dass die optische und/oder akustische Meldung bei nicht angelegtem Sicherheitsgurt erst erzeugt wird, wenn sich der Motor aus eigener Kraft dreht.

Die Aufgabe wird erfindungsgemäss dadurch gelöst, dass der Spannungsrückgang bei der Stromaufnahme des Anlassers durch einen Sensor erfasst wird und das ein dem Spannungsrückgang zugeordneter Binärwert in einen Speicher eingegeben wird, dessen Ausgang mit einem Eingang einer Torschaltung verbunden ist, von der die Anordnung zur Erzeugung der optischen und/oder akustischen Meldung betätigbar ist und deren zweiter Eingang an einen Komparator angeschlossen ist, der auf die von der Lichtmaschine abgegebene Spannung eingestellt ist. Mit dieser Anordnung wird das Absinken der Batteriespannung durch den hohen Stromverbrauch des Anlassers dazu ausgenutzt, die Meldung vorzubereiten. Die Meldung wird aber erst nach dem Anlassen des Motors vor Beginn der Fahrt hervorgerufen. Falls das Anlegen der Sicherheitsgurte vergessen wurde, können diese noch vor Fahrtbeginn angelegt werden.

Wenn der Motor nicht sofort anspringt, wird daher nicht während des Anlassvorgangs schon die Sicherheitsgurtwarnung hervorgerufen. Ein weiterer Vorteil der oben beschriebenen Sicherheitsgurt-Meldevorrichtung ist darin zu sehen, dass diese keine eigenen Leitungen zum Zündschalter benötigt. Bei der aus der US-A-3 962 677 bekannten Sicherheitsgurt-Meldevorrichtung müssen zwei Leitungen zwischen dem Zündschalter und eigens vorgesehenen Eingängen der Ansteuerschaltung verlegt werden. Bei der oben beschriebenen Sicherheitsgurt-Meldevorrichtung kann der Sensor gemeinsam mit den Betriebsspannungsanschlüssen an einer geeigneten Stelle mit dem Stromversorgungssystem des Kraftfahrzeugs verbunden sein.

Zweckmässigerweise besteht die optische Meldung in der Erzeugung einer kontinuierlichen oder intermittierenden Leuchtschrift, die auf die Sicherheitsgurte hinweist. Es kann z.B. der Ausdruck: «Bitte anschnallen» oder «Fasten seat belt» in Form einer Leuchtschrift angezeigt werden. Die akustische Meldung, z.B. ein Gong, ein Brumm- oder Pfeifton, macht auf die Anzeigeelemente im Fahrzeug aufmerksam. Bei der Beobachtung der Anzeigeelemente stellen dann die Insassen die Leuchtschrift fest, die auf das Anlegen der Sicherheitsgurte hinweist.

Vorteilhafterweise kann im Schloss des Sicherheitsgurts ein Schalter angeordnet sein, der nur bei eingerastetem Bügel des Gurts betätigt wird und über den ein Rückstellungssignal auf den Speicher gegeben wird, um diesen zu löschen. Nach der Löschung des Speichers wird die optische und die akustische Meldung beendet.

Ein solcher Schalter kann wenigstens für den Gurt des Fahrersitzes vorgesehen sein, da bei der Fahrt sich zumindest eine Person im Fahrzeug befindet. Für die Schalter der anderen Gurte kann ein Überbrückungsschalter vorgesehen sein, der vom Fahrer betätigt wird, wenn sich keine weiteren Insassen im Fahrzeug befinden.

Vorzugsweise ist der Sensor ein von der Batteriespannung gespeister Spannungsteiler, dessen Abgriff über eine Signalformerstufe an den Eingang des Speichers gelegt ist. Die Signalformerstufe erzeugt aus der am Abgriff anstehenden Spannung einen Binärwert, der in den Speicher gelangt.

Zweckmässigerweise ist der Spannungsteiler zu einem Kondensator parallel geschaltet, der über eine in Durchlassrichtung gepolte Diode mit einem Pol der Batterie verbunden ist. Wenn der Anlasser in Betrieb ist, sinkt die Batteriespannung stark ab. Die Diode verhindert dabei den Abfluss der Kondensatorladung zur Batterie hin. Der Kondensator entlädt sich stattdessen über den Spannungsteiler. Wenn die Batteriespannung infolge hohen Anlasserstroms eine gewisse Grenze unterschritten hat, steht am Abgriff ein Spannungswert an, der beispielsweise einer binären «1» zugeordnet wird. Dieser binäre Wert wird über die Signalformerstufe in den Speicher mit einer «O» eingegeben. Der Kondensator gewährleistet in Verbindung mit dem Spannungsteiler eine genau vorgegebene Entladung, die nicht von der Batteriespannung beeinflusst wird, solange diese kleiner als die Spannung am Kondensator zuzüglich der Diodenschwellenspannung ist.

Bei einer anderen bevorzugten Ausführungsform ist der Speicher ein SR-Flipflop, das durch ein von der Verzögerungszeit der Zeitverzögerungsschaltung abhängiges Signal zurücksetzbar ist. Hierdurch ergibt sich ein sehr einfacher schaltungstechnischer Aufbau.

Zweckmässigerweise ist an die Torschaltung ein Monoflop angeschlossen, dessen Ausgang je an eine Treiberschaltung für eine Leuchtanzeige und einen akustischen Melder angeschlossen ist.

Die Erfindung wird im folgenden anhand eines in einer Zeichnung dargestellten Ausführungsbeispiels näher erläutert, aus dem sich weitere Merkmale sowie Vorteile ergeben.

Es zeigen

Fig. 1 ein Blockschaltbild einer Sicherheitsgurt-Meldevorrichtung für Kraftfahrzeuge,

Fig. 2 den Aufbau der Sicherheitsgurt-Meldevorrichtung gemäss Fig. im einzelnen.

Eine Sicherheitsgurt-Meldevorrichtung ist über Leitungen an die Pole 2, 3 einer Batterie 4 eines nicht näher dargestellten Kraftfahrzeugs angeschlossen, das einen ebenfalls nicht dargestellten Anlasser enthält, der über einen mittels des Zündschlüssels betätigbaren Schalter an die Batterie 4 angelegt wird, um den Verbrennungsmotor des Kraftfahrzeugs zu starten. Der Pol 2 führt positives Potential, während der Pol 3 der Batterie an Masse gelegt ist. Mit dem Pol 2 ist eine Diode 5 verbunden. Die Anode der Diode 5 ist an den Pol angeschlossen, während die Kathode mit einem aus zwei Widerständen 6, 7 bestehenden Spannungsteiler 8 verbunden ist. Der Spannungsteiler 8 ist mit seinem Abgriff 9 an den Eingang einer Signalformerstufe 10 angeschlossen, bei der es sich um ein NAND-Glied handeln kann. Parallel zum Spannungsteiler 8 ist ein Kondensator 11 geschaltet. Die zweiten Anschüsse des Kondensators 11 und des Widerstands 7 sind an Massepotential gelegt. Der Ausgang der Signalformerstufe 10 ist mit dem Eingang 12 eines Speichers 13 verbunden, dessen Ausgang an den Eingang einer Torschaltung 14 angeschlossen ist, die einen weiteren, an den Ausgang eines Komparators 15 angeschlossenen Eingang aufweist. Bei der Torschaltung 14 handelt es sich um ein weiteres NAND-Glied. Der Komparator 15, beispielsweise ein Schmitt-Trigger, erhält durch die Pole 2, 3 der Batterie 4 Betriebsspannung. Der Eingang 16 des Komparators 15 ist mit dem Pol 2 verbunden. Mit dem Ausgang der Torschaltung 14 ist der Eingang eines Monoflops 17 verbunden, dessen nichtinvertierender Ausgang eine Leitstungsendstufe 18 speist, der eine Leuchtanzeige 19 nachgeschaltet ist. Die Leuchtanzeige 19 besteht z.B. aus einer Leuchte, die hinter einer lichtundurchlässigen Platte angeordnet ist, die Aussparungen in Form der Ausdrücke «Bitte anschnallen» oder «Fasten Seat Belt» enthält.

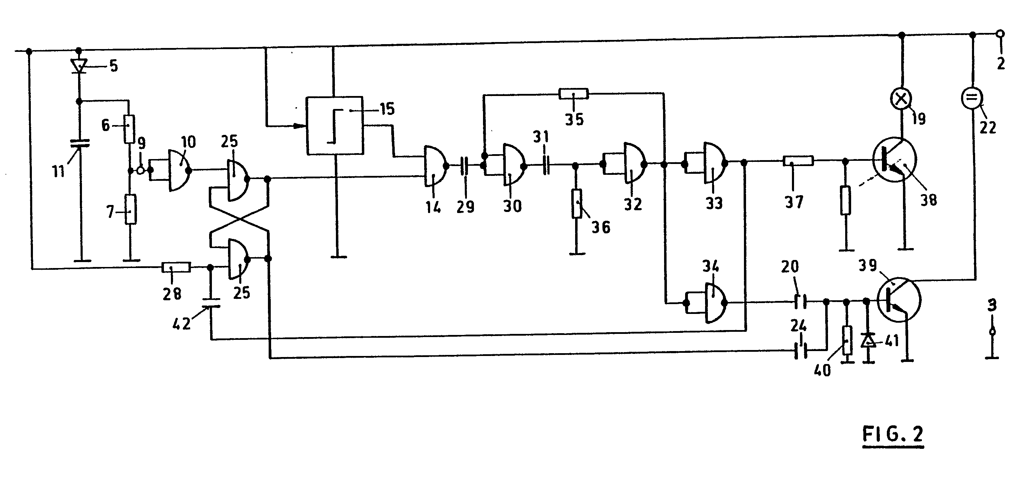

Die Torschaltung 14 speist weiterhin über einen Kondensator 20 einen Eingang einer zweiten Leistungsendstufe 21, mit deren Ausgang ein Gong 22 verbunden ist. Der invertierende Ausgang des Monoflops 17 steht einerseits mit einem Rücksetzeingang 23 des Speichers 13 und andererseits über einen Kondensator 24 mit einem weiteren Eingang der Leistungsendstufe 21 in Verbindung. Bei dem Speicher 13 handelt es sich um ein RS-Flipflop, das wie in Fig. 2 dargestellt, aus zwei kreuzgekoppelten NAND-Gliedern 25 aufgebaut sein kann.

Wenn der Anlasser betätigt wird, sinkt die Spannung der Batterie 4 ab. Die Diode 5 verhindert eine Entladung des Kondensators 11 in Richtung des Pols 2. Der Kondensator 11 entlädt sich stattdessen über den Spannungsteiler 8, wobei die Kondensatorspannung nach einer Exponentialfunktion abnimmt. Das Teilerverhältnis der Widerstände 6, 7 ist so bemessen, dass die Spannung am Abgriff 9 im Zuge der Entladung die Schwelle unterschreitet, unterhalb der die Signalformerstufe 10 das Eingangssignal als Binärwert «1» bewertet. Die Signalformerstufe 10, ein NAND-Glied, invertiert dieses Eingangssignal und setzt den Speicher 13 mit dem Binärwert «0». Durch den stetigen, gleichmässigen Abfall der Kondensatorspannung hat das NAND-Glied ausreichend Zeit, in den Speicher 13 die binäre «0» einzugeben. Die Elemente 10, 13, die vorzugsweise in CMOS-Technik ausgebildet sind, verbrauchen nur sehr wenig Betriebsstrom. Es ist möglich, Elemente 10, 13 zu verwenden, deren Betriebsspannung in weiten Grenzen schwanken kann. Das Ausgangssignal des Speichers 13 steht an der Torschaltung an. Wenn die Batteriespannung nach der Unterbrechung der Stromzufuhr zum Anlasser wieder ihre ursprüngliche Höhe erreicht hat, spricht der Komparator 15 an, dessen Schwelle auf diejenige Batteriespannung eingestellt sein kann, die sich bei einer relativ starken Entladung ergibt. Vorzugsweise ist der Komparator auf die von der Lichtmaschine erzeugte Spannung eingestellt. Dann spricht der Komparator erst an, wenn die Lichtmaschine in Betrieb ist. Der Komparator gibt nach dem Ansprechen die Torschaltung 14 frei, deren Ausgangssignal das Monoflop 17 und die Leistungsendstufe 21 anstösst. Über den Kondensa-tor 20 wird die Leistungsendstufe 21 zur Abgabe ei-nes Impulses angeregt, durch den der Gong 22 betätigt wird. Zugleich wird über das abfallverzögerte Ausgangssignal des Monoflops 17 die Leistungsendstufe 18 angeregt, die die Leuchtanzeige 19 mit Strom versorgt. Durch den Klang des Gongs und das Aufleuchten der Leuchtanzeige 19 werden die Insassen des Kraftfahrzeugs auf das Anlegen der Sicherheitsgurte aufmerksam gemacht. Nach der im Monoflop 17 eingestellten Verzögerungszeit, die auf die für das Anlegen eines Gurts notwendige mittlere Zeit eingestellt ist, geht das Ausgangssignal am nichtinvertierenden Ausgang des Monoflops 17 zurück. Damit wird die Leistungsendstufe 18 gesperrt und die Leuchtanzeige 19 erlischt. Zugleich steigt das Signal am invertierenden Ausgang des Monoflops 17 an, wodurch der Speicher 13 über den Eingang 23 zurückgesetzt wird.

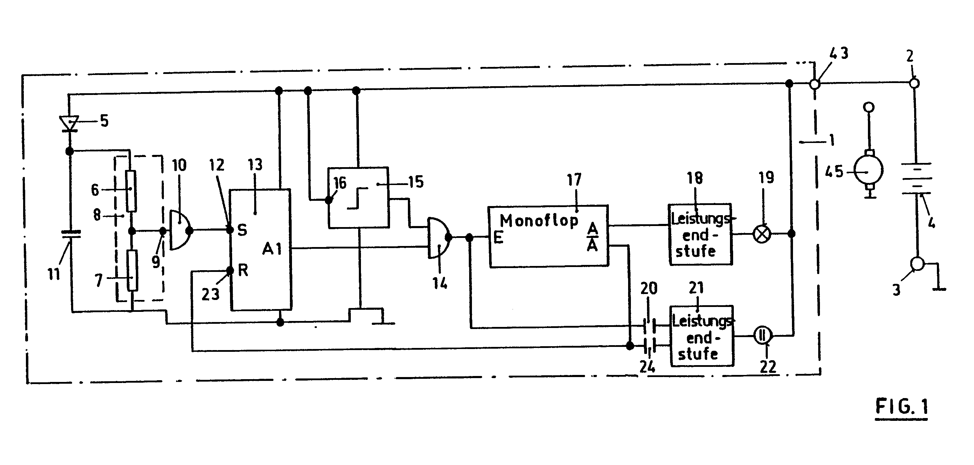

Nähere Einzelheiten der in Fig. 1 dargestellten Schaltung sind in Fig. 2 gezeigt, wobei gleiche Elemente mit den gleichen Bezugszeichen versehen sind. Das NAND-Glied 10 enthält zwei Eingänge, die gemeinsam mit dem Abgriff 9 verbunden sind. Der Ausgang des NAND-Glieds 10 speist einen Eingang eines der NAND-Glieder 25. Der eine Eingang des anderen NAND-Gliedes 25 ist über einen Widerstand 28 mit dem Pol 2 verbunden. Der Ausgang der Torschaltung 14, eines NAND-Glieds, speist über einen Kondensator 29 ein NAND-Glied 30, das über einen Kondensator 31 mit einem NAND-Glied 32 verbunden ist, dessen Ausgang einerseits an die Eingänge zusätzlicher NAND-Glieder 33, 34 angeschlossen und andererseits über einen Widerstand 35 auf den Eingang des NAND-Glieds 30 rückgekoppelt ist. Zwischen dem Eingang des NAND-Glieds 32 und Masse ist ein weiterer Widerstand 36 angeordnet. Das NAND-Glied 33 speist über einen Widerstand 37 die Basis eines Transistors 38, in dessen Kollektorkreis die Leuchtanzeige 19 angeordnet ist. Das NAND-Glied 34 ist über den Kondensator 20 mit der Basis eines Transistors 39 verbunden, in dessen Kollektorkreis der Gong 22 angeordnet ist. Die Basis des Transistors 39 ist ferner über einen Widerstand 40 und eine Diode 41 an Masse und über den Kondensator 24 mit dem Ausgang des zweiten NAND-Glieds 25 verbunden, dessen Ausgang auf einen Eingang des ersten NAND-Glieds 25 zurückgekoppelt ist. Der Ausgang des NAND-Glieds 33 ist über einen Kondensator 42 mit dem an den Widerstand 28 gelegten Eingang des zweiten NAND-Glieds 25 verbunden. Die Elemente 29, 30, 31, 32, 33, 34, 35 und 36 bilden das Monoflop 17. Im Ruhezustand hat der Ausgang des NAND-Glieds 32 hohes Potential, während der Eingang des NAND-Glieds 30 auf hohem und der Ausgang auf niedrigem Potential liegt. Wenn der Eingang des NAND-Glieds 30 über einen Impuls vom Kondensator 29 auf niedriges Potential gezogen wird, lädt das NAND-Glied 30 den Kondensator 31 auf, wodurch hohes Potential auf den Eingang des NAND-Glieds 32 gelangt. Das NAND-Glieds 32 schaltet um und hält den Eingang des NAND-Glieds 30 auf niedrigem Potential. Der Kondensator 31 entlädt sich über den Widerstand 36, wodurch das NAND-Glied 37 eingangsseitig wieder mit niedrigem Potential beaufschlagt wird. Dadurch schaltet das NAND-Glied 32 wieder auf hohes Ausgangspotential um, wodurch der Ruhezustand wieder hergestellt wird. Wenn das Potential am Ausgang des NAND-Glieds 32 niedrig ist, führen die Ausgänge der NAND-Glied 33, 34 hohes Potential. Das hohe Potential am Ausgang des NAND-Glieds 33 steuert den Transistor 38 leitend. Der Sprung des Ausgangssignals des NAND-Glieds 34 steuert den Transistor 39 über den Kondensator 20 leitend, bis sich der Kondensator 20 über den Widerstand 40 entladen hat.

Der mit der Torschaltung 14 verbundene Ausgang des ersten NAND-Glieds 25 führt im Ruhezustand niedriges Potential. Auch zu den Eingängen des ersten NAND-Glieds 25 stehen hohe Potentiale an. Sobald der Abgriff 9 mit der Betätigung des Anlassers auf niedriges Potential bei gleichzeitigem und stärkerem Absinken der Schaltspannung absinkt, beaufschlagt das NAND-Glied 10 den einen Eingang des ersten NAND-Glieds 25 mit Null-Potential, wodurch der Ausgang dieses NAND-Glieds hohes Potential annimmt. Das NAND-Glied 14 schaltet auf niedriges, das Monoflop 17 anstossende Potential um, wenn der Komparator 15 bei Abtastung der Lichtmaschinenspannung hohes Potential ausgibt. Wenn die Verzögerungszeit des Monoflops 17 abgelaufen ist, wird das aus den NAND-Gliedern 25 bestehende SR-Flipflop über einen Impuls, der vom Kondensator 24, 42 übertragen wird, in den Ruhezustand zurückgesetzt.

Die Sicherheitsgurte können je mit einem beim Schliessen des Gurts betätigbaren Schalter versehen sein, über den ein Rücksetzsignal an den Speicher 13 geleitet wird. In diesem Fall ist keine Verzögerungsschaltung 17 notwendig. Die Schalter können auch an einen evtl. im Fahrzeug vorhandenen Fahrtschreiber angeschlossen sein, der während der Fahrt die Schliesszeiten der Sicherheitsgurte registriert.

## Patentansprüche

1. Sicherheitsgurt-Meldevorrichtung für Kraftfahrzeuge, die je eine Batterie (4), eine Lichtmaschine und einen Anlasser aufweisen, der zum Anlassen eines Verbrennungsmotors von der Batterie (4) mit Energie versorgt wird, wobei eine Anordnung (19, 22) zur Erzeugung einer optischen und/oder akustischen Meldung vorgesehen ist, dadurch gekennzeichnet, dass der Spannungsrückgang bei der Stromaufnahme des Anlassers durch einen Sensor (8) erfasst wird und dass ein dem Spannungsrückgang zugeordneter Binärwert in einen Speicher (13) eingegeben wird, dessen Ausgang mit einem Eingang einer Torschaltung (14) verbunden ist, von der die Anordung, (19, 22) zur Erzeugung der optischen und/oder akustischen Meldung betätigbar ist und deren zweiter Eingang an einen Komparator (15) angeschlossen ist, der auf die von der Lichtmaschine abgegebene Spannung eingestellt ist.

2. Sicherheitsgurt-Meldevorrichtung nach Anspruch 1, dadurch gekennzeichnet, dass als optische Meldung eine kontinuierlich oder intermittierend angeregte Leuchtanzeige (19) vorgesehen ist, die auf die Sicherheitsgurte hinweist.

3. Sicherheitsgurt-Meldevorrichtung nach Anspruch 1, dadurch gekennzeichnet, dass der Sensor (8) ein von der Batterie (4) gespeister Spannungsteiler ist, dessen Abgriff (9) über eine Signalformerstufe (10) an den Eingang des Speichers (13) gelegt ist.

4. Sicherheitsgurt-Meldevorrichtung nach Anspruch 3, dadurch gekennzeichnet, dass der Spannungsteiler (8) zu einem Kondensator (11) parallel geschaltet ist, der über eine in Durchlassrichtung gepolte Diode (5) mit einem Pol (2) der Batterie (4) verbunden ist.

5. Sicherheitsgurt-Meldevorrichtung nach Anspruch 3 oder 4, dadurch gekennzeichnet, dass die Signalformerstufe (10) ein NAND-Glied oder ein Binär-Inverter ist.

6. Sicherheitsgurt-Meldevorrichtung nach Anspruch 1 oder einem der folgenden Ansprüche, dadurch gekennzeichnet, dass der Speicher (13) ein SR-Flipflop ist, das durch ein von der Zeitverzögerungsschaltung (17) abhängiges Signal zurücksetzbar ist.

7. Sicherheitsgurt-Meldevorrichtung nach Anspruch 3 oder einem der folgenden Ansprüche, dadurch gekennzeichnet, dass die Zeitverzögerungsschaltung (17) ein Monoflop ist.

8. Sicherheitsgurt-Meldevorrichtung nach Anspruch 4, dadurch gekennzeichnet, dass das je Sicherheitsgurt vorgesehene Schaltelement zusätzlich mit einem Fahrtschreiber verbunden ist, der die Dauer der Batätigung aufzeichnet.

## Claims

1. Safety belt prompting device for motor vehicles which in each case have a battery (4), a generator and a starter which is provided with power for starting an internal combustion engine by the battery (4), an arrangement (19, 22) being provided for the production of an optical and/or acoustic signal, characterised by the fact that the voltage drop in the power consumption of the starter is detected by a sensor (8) and that a binary value assigned to the voltage drop is put into a store (13), the output of which is linked with the input of a gate circuit (14), from which the arrangement (19, 22) for producing the optical and/or acoustic signal can be actuated, and the second input of which is connected to a comparator (15) which is set to the voltage supplied by the generator.

2. Safety belt prompting device according to Claim 1, characterised by the fact that a continuously or intermittently illuminated light indicator (19) is provided as an optical warning drawing attention to the safety belts.

3. Safety belt prompting device according to Claim 1, characterised by the fact that the sensor (8) is a voltage divider fed by the battery (4), the tapping point (9) of which is put to the input of the store (13) through a signal-conditioning stage (10).

4. Safety belt prompting device according to Claim 3, characterised by the fact that the voltage divider is connected parallel to a capacitor (11) which is linked to a pole (2) of the battery (4) through a diode (5) oriented in the conducting direction.

5. Safety belt prompting device according to Claim 3 or Claim 4, characterised by the fact that the signal-conditioning stage (10) is a NAND-gate or a binary inverter.

6. Safety belt prompting device according to Claim 1 or to one of the following claims, characterised by the fact that the store (13) is an SR-flipflop which can be reset by a signal depending on the time delay circuit (17).

7. Safety belt prompting device according to Claim 3 or to one of the following claims, characterised by the fact that the time delay circuit (17) is a monoflop.

8. Safety belt prompting device according to Claim 4, characterised by the fact that the switch unit provided for each safety belt is additionally linked to a drive recorder which records the duration of the actuation.

**Rivendications**

1 Avertisseur de ceintures de sécurité pour véhicules automobiles comportant chacun une batterie (4), une dynamo d'éclairage et un démarreur qui est alimenté en énergie par la batterie (4) pour faire démarrer un moteur à combustion, un système (19, 22) étant prévu pour émettre un avertissement optique et/ou acoustique, caractérisé en ce que le manque de tension lors de la consommation de courant du démarreur est détecté par un capteur (8) et en ce qu'une valeur binaire attribuée au manque de tension est introduite dans une mémoire (13) dont la sortie est raccordée à une entrée d'un circuit porte (14) par lequel le système (19, 22) destiné à émettre l'avertissement optique et/ou acoustique peut être actionné, et dont la deuxième entrée est raccordée à un comparateur (15) qui est réglé à la tension débitée par la dynamo d'éclairage.

2. Avertisseur de ceintures de sécurité selon la revendication 1, caractérisé en ce que, comme avertissement optique, on prévoit un voyant lumineux (19) excité en continu ou par intermittence et attirant l'attention sur les ceintures de sécurité.

3. Avertisseur de ceintures de sécurité selon la revendication 1, caractérisé en ce que le capteur (8) est un diviseur de tension alimenté par la batterie (4) et dont la prise (9) est raccordée, via un étage de formage de signaux (10), à l'entrée de la mémoire (13).

4. Avertisseur de ceintures de sécurité selon la revendication 3, caractérisé en ce que le diviseur de tension (8) est monté en parallèle avec un condensateur (11) qui est raccordé, via une diode (5) polarisée dans le sens de conduction, à un pôle (2) de la batterie (4).

5. Avertisseur de ceintures de sécurité selon la revendication 3 ou 4, caractérisé en ce que l'étage de formage de signaux (10) est un élément NON-ET ou un inverseur binaire.

6. Avertisseur de ceintures de sécurité selon la revendication 1 ou une des revendications suivantes, caractérisé en ce que la mémoire (13) est une bascule SR qui peut être repositionnée par un signal dépendant d'un élément de retard (17).

7. Avertisseur de ceintures de sécurité selon la revendication 3 ou une des revendications suivantes, caractérisé en ce que l'élément de retard (17) est une bascule monostable.

8. Avertisseur de ceintures de sécurité selon la revendication 4, caractérisé en ce que l'élément de montage prévu pour chaque ceinture de sécurité est, en outre, raccordé à un enregistreur de marche qui indique la durée du fonctionnement.

FIG. 1

FIG. 2

0 159 370